Europäisches Patentamt

European Patent Office

Office européen des brevets

(19)

(11) Publication number: **0 073 746
B1**

# EUROPEAN PATENT SPECIFICATION

(12)

(45) Date of publication of patent specification: **05.03.86**

(21) Application number: **82850165.0**

(22) Date of filing: **04.08.82**

(51) Int. Cl.⁴: **G 01 N 1/12,** G 01 K 13/12, G 01 K 1/08

(54) Method and apparatus for testing and taking samples from liquid metal.

(30) Priority: **31.08.81 SE 8105133**

(43) Date of publication of application:
**09.03.83 Bulletin 83/10**

(45) Publication of the grant of the patent:
**05.03.86 Bulletin 86/10**

(84) Designated Contracting States:
**AT BE CH DE FR GB IT LI LU NL**

(56) References cited:
**FR-A-1 317 777
FR-A-1 574 054
FR-A-2 181 933
GB-A- 924 408
GB-A-1 398 154
US-A-4 197 745**

(73) Proprietor: **ROCKWOOL AKTIEBOLAGET
Fack 615
S-541 86 Skövde (SE)**

(72) Inventor: **Kumbrant, Lars
c/o Rescon AB Box 35
S-190 63 Örsundsbro (SE)**
Inventor: **Olofsson, Gunnar
c/o Rockwool AB Division Laxa Bruk Box 111
S-651 01 Laxa (SE)**
Inventor: **Larsson, Mats c/o Rockwool AB
Division Laxa Bruk Box 111
S-651 01 Laxa (SE)**

(74) Representative: **Avellan-Hultman, Olle
Avellan-Hultman Patentbyra AB P.O. Box 5366
S-102 46 Stockholm 5 (SE)**

Courier Press, Leamington Spa, England.

## Description

The present invention generally relates to a method and an apparatus for testing and taking test samples from or making measurements in liquid iron, steel or any other metal or metal alloy, and the invention is more particularly concerned with an apparatus for protecting the testing and sampling equipment against the heat from the molten metal.

For determining certain parameters of the liquid metal, for instance the temperature of the molten metal, the content of oxygene, carbon or different alloy materials a test is made or a test sample is taken in that a lancet having a testing or sampling equipment at the end thereof is introduced in the liquid metal. By modern methods the test can be made or the sample can be taken within the course of about 6-8 seconds, but since the liquid metal generally has substantially higher temperature than the lancet and some testing or sampling equipments can stand even for the said relatively short period of time such parts have to be protected against the heat of the molten metal.

For protecting the lancet and the sampling equipment it is known, e.g. from US—A—4,197,745 (Kumbrant) to make use of a sleeve of compressed cardboard which is mounted round the portion of the lancet with the sampling equipment which is to be introduced in the molten metal.

When introducing the lancet with the cardboard sleeve in the liquid metal, moisture is separated from the cardboard sleeve in the form of water steam. At the same time the cardboard sleeve is burnt and becomes charred whereby in addition thereto gases are developed. The said gases cause a heavy turbulent flow or cooking around the cardboard sleeve. Such heavy cooking makes the molten metal splash and sputter what is a serious risk of accidents for the operator of the testing or sampling equipment. Since cardboard is relatively heavy hydroscopical the cardboard sleeve normally contains some amounts of water.

In order to avoid the disadvantages involved in a protection sleeve of cardboard it has been suggested in GB—A—1,398,154 to form the protection sleeve of a fire proof material for instance a fire proof fibrous wool material. Since molten steel often has a temperature of 1 600-1 800°C the fire proof fibrous wool must be of a type which is capable to stand such temperature for at least 6-8 seconds which are needed for taking the test or sample. The said fibrous wool material is expensive and it may often be difficult to design or mount the fibrous wool, so as to provide a solid protection sleeve which thermically protects the lancet and the testing or sampling equipment and at the same time allows a movement of the liquid metal around the testing or sampling equipment.

A protection sleeve of refractory or fire proof material gives no or practically no turbulent flow or cooking around the protection sleeve and thereby the disadvantage of heavy cooking and splashing as when using the cardboard sleeve is thereby eliminated. Also the fire proof fibrous wool does not add carbon or any other substances to the liquid metal which may adversely effect the result of the analysis of the sample which has been taken.

It has, however, been shown that in some cases a large scattering of the test values and sometimes obvious false values are obtained. It is supposed that the reason therefore is that the molten metal around the protection sleeve move in a laminar flow passing along the surfaces of the protection sleeve, the lancet and the sampling equipment, whereby the molten metal is cooled and possibly subjected to structural changes before reaching the sampling equipment. It has especially been shown that the scattering of the results when measuring the temperature of a liquid metal by means of a protection sleeve of refractory or fire proof material is very large. While normally an accuracy of measurement for the temperature of about ±1°C is supposed to be obtained when measuring liquid metal at about 1 550°C it has been shown that a scattering of the measured temperature results when using a protection sleeve of refractory or fire proof material is about 10—20°C. Consequently a false value of the temperature is obtained what can be of great importance for guiding the quality of the ready treated liquid metal.

It has consequently been shown that some turbulent movement or cooking around the protection sleeve during the sampling is advantageous or even necessary for giving a good and safe result. The cooking, however, must take place under controlled conditions and no substantially amounts of carbon or any other substances which may adversely effect the test results are allowed to be introduced in the liquid metal.

The above mentioned problems are solved according to the invention by the method and the apparatus as claimed in claims 1 and 3, respectively.

According to an objective of the invention the protection sleeve therefore should be made of a material which does not burn in the same way as a cardboard sleeve and which is also not directly fire proof like a sleeve made of fire proof fibrous wool. The movement or cooking of the molten metal also should be relatively constant during the entire period of testing or sampling irrespective of the fact that the protection sleeve progressively melts or is consumed in any other way.

Accordingly it is therefore suggested that the protection sleeve be made of a material which does not burn but melts at reasonable speed in the liquid metal and which during the melting successively develops gases providing a predetermined bubbling or cooking and thereby a turbulent flow round the protection sleeve in the molten metal. A particularly suitable material for this purpose has proved to be a compressed material of synthetic amorphous mineral fibres having a sagging point of less than about 1 200°C as measured according to the method stipulated by the National Swedish Institute for Materials Testing, and which comprises a binder which is evenly distributed in the material and which is decomposed at the temperature of the liquid metal while developing gas bubbles. The mineral fibres may be bound by different types of binders, but preferably at least some portion of the binder should be of organic type, preferably a thermosetting resin like phenol resin, carbomide resin or melamine resin. At the manufacture of said mineral fibres, they normally obtain a mass by unit of volume of about 20-70 kg/m$^3$ and for providing a stable protection sleeve having a suitable consumption in the liquid metal the mineral fibre preferably should be compressed to a mass by unit of volume by about 200-800 or preferably 500-700 kg/m$^3$.

Since the mineral fibres only successively melt in the liquid metal the fibrous material can be considered substantially inert and what provides the intended bubbling or cooking is a binder. By an intimate mixing of mineral fibres with a suitable amount of binder it is thereby possible to foresee a cooking which is controlled and can be predetermined and which is substantially constant independently of the consumption of the protection sleeve during the course of sampling. Consequently the gas developing binder is determining the amount of bubbling or cooking. A suitable addition of the organic binder is 2-8% by mass as calculated on the mass of the ready protection sleeve.

The wall thickness and the hardness of the mineral fibre sleeve is calculated so that the protection sleeve does not melt completely and so that it maintains some intended stability during the course of the testing or sampling. Depending on which metal is to be tested and in front of all the temperature of the actual metal the amount of organic binder, the weight by volume of the sleeve material and the wall thickness of the ready sleeve is varied.

According to a preferred further development of the invention the protection sleeve of mineral fibres is provided with an inner relatively thin additional layer made of cardboard, for example, and which provides an additional bar as a protection for the lancet for instance if the mineral fibre sleeve should be defective or has uneven wall thicknesses which cannot be discovered by the eye. Also this additional layer can be used to provide a signal that the mineral fibre sleeve has melted down in that a heavy cooking appears as soon as the molten metal penetrates into the additional layer when the testing or sampling period is exceeded.

Further characteristics of the invention will be evident from the following detailed description in which reference will be made to the accompanying drawings.

In the drawings figure 1 diagrammatically shows an axial cross section through an apparatus for taking an analysis sample of liquid metal and formed with a protection sleeve according to the invention. Figure 2 correspondingly shows an apparatus having a test probe for measuring the temperature of the molten metal and which apparatus likewise is formed with a protection sleeve according to the invention. Figure 3 is a cross section through a modified embodiment of a protection sleeve according to the invention.

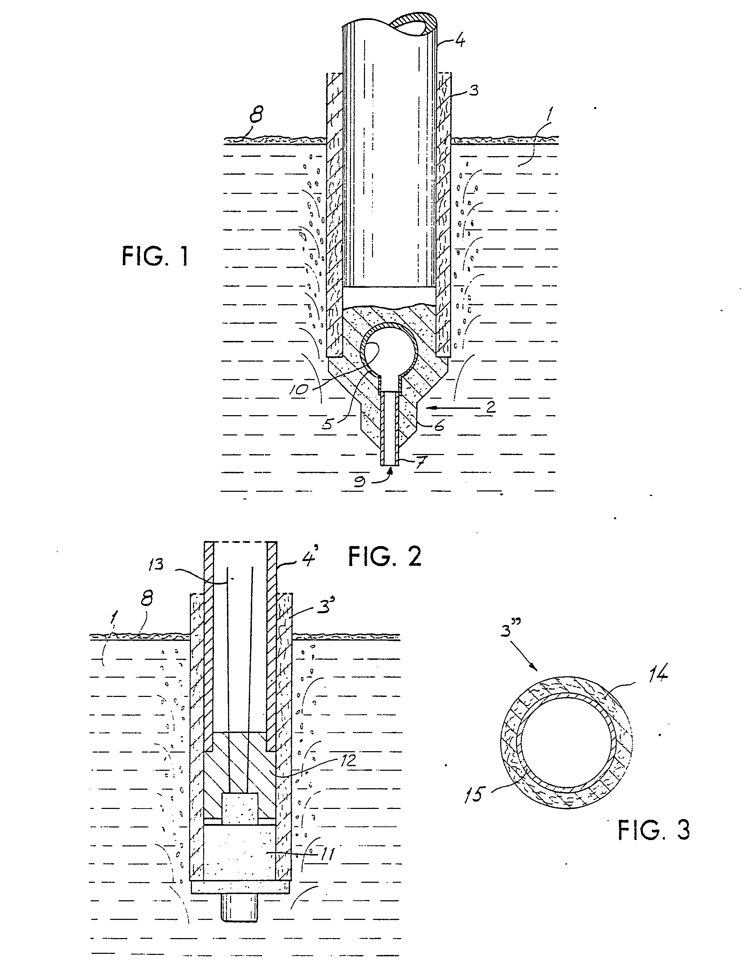

The apparatus shown in figure 1 for taking analysis samples from a liquid metal bath 1 generally comprises a sampling tip 2 which by means of a protection sleeve 3 is mounted on a lancet 4. In the illustrated case the sampling tip is formed with a shot mould 5 which is moulded in a sampling tip body 6 of sand and into which a refractory tube extends, for instance a tube 7 of quartz glass. The sampling or test equipment, however, can be of any other type, since the type of sampling or testing equipment is out of the area of interest for the very invention.

The sampling tip 2 is mounted at the end of the protection sleeve 3, for instance by means of glue, and the protection sleeve 3 in turn is mounted round a lancet 4 by means of which the sampling equipment together with the protection sleeve can be handled during the course of the sampling or testing. The object of the protection sleeve 3 is both to protect the lancet and any other parts of the equipment against damage depending of the high temperature of the liquid metal, and also to provide a turbulent flow in the liquid metal round the protection sleeve and at or adjacent the sampling or testing means which can be a sampling tip as shown in figure 1 or a thermo testing element as shown in figure 2, an oxygene probe, a pyrometer or similar means.

The thermoinsulating sleeve 3 is made of a material which is not fireproof or can be burnt but has a sagging point which is lower than the temperature of the molten metal. By sagging point is meant the temperature as defined by the National Swedish Institute for Materials Testing, at which the material gets a special sagging or softening structure. A material suited for most generally appearing liquid metals is mineral fibres having a sagging temperature of 1 000—1 200°C. Preferably synthetic amorphous mineral fibres are used, preferably mineral fibres of diabase type which have a melting temperature of about 1 400°C and which for short periods of time can be subjected to the above mentioned high temperatures without any risk that the material melts too quickly. Mineral fibres of diabase type have a sagging point according to the stipulations of the National Swedish Institute for Materials Testing of between about 1 000 and 1 200°C.

A normal sampling or testing by the use of a modern equipment or a manual sampling or testing takes a time of 6—8 seconds, and the protection sleeve 3 therefore must be able to stand the high temperature of the molten metal for at least such period of time. For obtaining a protection sleeve which is consumed by a suitable speed the thermoinsulating sleeve 3 must have a predetermined hardness and a predetermined thickness. At the manufacture mineral

fibres normally get a mass per unit of volume of about 20—70 kg/m$^3$, but in order to obtain a suitable hardness the mineral fibres are compressed to a mass per unit of volume of about 200—800 or 500—700 kg/m$^3$. For keeping the mineral fibres together a binder of a type known per se is used.

In order to obtain the above mentioned turbulent movement of the liquid metal round the protection sleeve 3 the binder, or at least some portion of the binder, should be an organic binder which at contact with the molten metal develops gases which give the molten metal a movement in the direction upwards which can be controlled and predetermined, in that the binder at least partly is of organic nature and/or in that substances have been incorporated in the fibrous material, for instance crystal water containing salts or carbonates, which at the temperature of the molten metal spontaneously and successively produce gases. As examples of suitable binders can be mentioned thermosetting resins like phenol resin, carbamide resin or melamine resin. The binder should be evenly distributed in the mineral fibre sleeve 3. The sleeve can be manufactured as a solid tube or in the form of two tube halves which are interconnected, and preferably the manufacture is made so that the mineral fibres are sprinkled with the organic binder in direct connection to the manufacture of the mineral fibre, whereupon the binder is brought to set at the same time as the mineral fibre tube is compressed to the intended mass by unit of volume value. By adding larger or minor amounts of binder it is possible to determine the bubbling or the cooking which is intended to appear. A large amount of binder gives a more heavy cooking and a little amount of binder gives a soft cooking. A suitable addition of the organic binder is 2—8% by mass as calculated on the ready mineral fibre tube.

The same effect as described above by adding the organic binder to the mineral fibre alternatively also can be obtained by adding salts to the mineral fibre, which at the contact with the hot molten metal emits $H_2O$ or $CO_2$. There are, however, certain difficulties in obtaining the controlled and predeterminable turbulent movement in the molten metal round the protection sleeve, and it is preferred that the mineral fibre material contains the organic binders.

Preferably the sleeves are manufactured with a predetermined least amount of binder, and the sleeves are additionally impregnated with further binder or possibly solutions of salt and other substances which emit gases when heated so that the correct gas emittance property is obtained for each specific application.

The wanted bubbling or cooking in the liquid metal should be at a limit, where on one side there is no longer a laminary flow of the liquid metal round the protection sleeve and on the other side the limit where there is splashing depending on too strong cooking. As mentioned above the cooking is controlled with reference to the temperature and the type of molten metal by controlling the amount and the type of gas emitting substance in the thermoinsulating sleeve and by controlling the hardness and thereby the consumption capacity of the liquid metal on the protection sleeve. It should be observed that the gas emitting in most cases is endothermic, and this may be utilized for instance by arranging the inner part of the mineral tube 14 to carry an additional layer 15 made of a material having substantially stronger gas emitting properties than the above mentioned gas emitting substances.

When using the apparatus shown in figure 1, the protection sleeve with the sand mold sampling tip 2 is mounted on the lancet, whereupon the sampling equipment with the tip is introduced in the molten metal 1 through a layer 8 of slag or other impurities. Thereby molten metal flows through the quartz glass tube 7 as shown with the arrow 9 and the metal fills the cavity 10 of the mold 5. The hot molten metal, which comes into contact with the outer surface of the protection sleeve 3, successively melts the outermost layers of the thermoinsulating sleeve 3, and at the same time the organic binder of the mineral fibre sleeve is decomposed so that gas bubbles are developed which provide a rising turbulent movement in the molten metal. By the inevitable cooling of the molten metal at the contact of the molten metal with the protection sleeve there is a tendency for a thin layer of molten metal to flow downwards along the protection sleeve. Depending on the turbulent movement provided by the action of the rising bubbles such movements downwards of the molten metal, however, is prevented and the turbulent movement thereby eliminates the action of the slight cooling of the metal layer just adjacent the surface of the protection sleeve. Also no particles or substances are capable of flowing down towards the quartz glass tube 7 and the sample taken from the molten metal is representative for the average composition of the molten metal.

Since the organic binder is intimately and evenly distributed in the mineral fibres a unitary gas formation and cooking is obtained during the course of the sampling or testing following the melting of the mineral fibre tube.

In figure 2 there is shown an apparatus for measuring the temperature of the liquid metal. The apparatus, which does not form part of the invention, comprises a temperature measuring probe 11 which is mounted at the end of a protection sleeve 3' which in turn is mounted in a lancet 4'. At the end of the lancet 4' there are means 12 for connection of the temperature probe 11. From the connection means 12 wiring 13 extends to some suitable instrument for reading the temperature observed by the temperature probe 11.

For getting a correct temperature statement it is of great importance that the layer of molten metal which is cooled by the contact with the protection sleeve 3' is not allowed to flow downwards towards the temperature probe 11, and this is eliminated in that the protection sleeve according to the invention is continuously and to a controlled degree emitting gas bubbles providing a rising turbulent flow of the metal layer closest to the protection sleeve. The cooled metal layer thereby is prevented from flowing down towards the temperature probe.

For certain applications, and as already mentioned in the present application, it may be wanted to provide a further improved thermical protection for the lancet or the sampling or test means provided inside the protection sleeve, and for this purpose the protection sleeve 3″ as shown in figure 3 may be formed as a mineral fibre tube 14 which at the inside thereof carries a thin additional layer 15 of cardboard. Such a cardboard layer 15 provides an improved thermical insulation, and the cardboard layer further can be used as a last signal of warning that the mineral fibre tube 14 is consumed. Such signal of warning is obtained in that the cooking is accelerated when the molten metal from the outside of the protection sleeve reaches as far as to the cardboard layer 15. In order not to damage the test means the test equipment is quickly retracted from the molten metal.

It is to be understood that the above specification and the embodiments of the inventions shown in the drawings are only illustrating examples and that many different modifications may be presented within the scope of the appended claims.

## Claims

1. Method of manufacturing protection sleeves for testing or taking test samples from a liquid metal by introducing the protection sleeve (3; 3′; 3″) and a testing or sampling means (2; 11) mounted therein into liquid metal (1), characterized by the steps of

bonding thermoinsulating mineral fibres together by a predetermined amount of a binder to form a tube, which tube acts as a protection sleeve and then

impregnating said mineral fibres with a solution which, after the solvent is evaporated, leaves substances that spontaneously and successively emits gases on contact with the liquid metal causing a controlled and predetermined turbulent flow of liquid metal round the protections sleeve.

2. Method according to claim 1, characterized by arranging the inner part of the mineral tube (14) to carry a layer (15) made of a material having substantially stronger gas emitting properties than said gas emitting substances.

3. Protection sleeve manufactured according to the method of claim 1 or 2 for use in protection of equipment for sampling or testing liquid metal by introducing the protection sleeve (3; 3′; 3″) as a thermal insulation together with the sampling and testing means (2; 11) mounted in the protection sleeve into liquid metal (1), and in which the protection sleeve on contact with the liquid metal causes a controlled and predetermined turbulent flow of the liquid metal flowing round the protection sleeve (3; 3′; 3″) characterized in that the protection sleeve comprises a tube (3) of synthetic thermoinsulating amorphous mineral fibres which are bonded together with a binder of a type which, on contact with the liquid metal, emits gases which give the liquid metal a controlled and predetermined rising movement of turbulent flow character along the protection sleeve (3; 3′; 3″), and in that the binder, at least partly, is of an organic nature and/or that substances have been incorporated in the fibre material, which substances spontaneously and successively emit gases at the temperature of the liquid metal.

4. Protection sleeve according to claim 3, characterized in that the synthetic amorphous mineral fibre is of diabase type having a sagging point of less than about 1 200°C as defined and measured according to the method stipulated by the Swedish Institute for Materials Testing.

5. Protection sleeve according to claim 3 or 4, characterized in that the mineral fibres having an original mass per unit of volume of 20—70 kg/m$^3$ which have been compressed to a mass per unit of volume of 200—800 kg/m$^3$ or preferably 500—700 kg/m$^3$ and have been formed to a tube.

6. Protection sleeve according to claim 3, 4 or 5, characterized in that the binder component is of organic type and comprises a thermosetting resin, for instance phenol resin, carbomide resin or melamine resin.

7. Protection sleeve according to claims 5 or 6, characterized in that the binder is added in an amount of 2—8 percents by mass as calculated on the total mass of the mineral fibres.

8. Protection sleeve according to any of claims 3—7, characterized in that the turbulent flow of the liquid metal is controlled by the addition of different types of binder and/or different amounts of binder.

9. Protection sleeve according to any of claims 3—7, characterized in that the turbulent flow of the liquid metal is controlled by designing the mineral fibre sleeve (3) at different mass per unit of volume.

10. Protection sleeve according to any of claims 3—9, characterized in that the wall thickness and hardness of the mineral fibre tube (3) are calculated so that the mineral fibre tube (3) while being progressively consumed in the liquid metal maintains a predetermined stability during the course of the necessary sampling or testing period.

11. Protection sleeve according to any of claims 3—10, characterized in that the thermoinsulating mineral fibre tube (14) at the inside thereof carries a thin tube (15) of cardboard.

## Patentansprüche

1. Verfahren zum Herstellen von Schutzmänteln für Messungen oder die Entnahme von Proben aus einer Metallschmelze durch Einführen des Schutzmantels (3; 3′;, 3″) und einer darin angebrachten Meß— oder Probeentnahmevorrichtung (2; 11) in die Metallschmelze, gekennzeichnet durch die Schritte

stoffschlüssiges Verbinden von wärmeisolierenden Mineralfasern miteinander mittels einer vorbestimmten Menge eines Binders zur Bildung eines Rohrs, welches Rohr als Schutzmantel wirksam ist, und darauf

Tränken der Mineralfasern mit einer Lösung, welche nach Verdunstung des Lösungsmittels Substanzen zurückläßt, welche bei Kontakt mit der Metallschmelze spontan und fortlaufend Gase freisetzen, um eine kontrollierte und vorbestimmte turbulente Strömung der Metallschmelze um den Schutzmantel hervorzurufen.

2. Verfahren nach Anspruch 1, gekennzeichnet durch die Ausbildung des inneren Teils des Mineralrohrs (14) für die Aufnahme einer Schicht (15) aus einem Material, welches beträchtlich stärkere Gasfreisetzungseigenschaften hat als die genannten gasfreisetzenden Substanzen.

3. Gemäß dem Verfahren nach Anspruch 1 oder 2 gefertigter Schutzmantel für die Verwendung zum Schutz von Vorrichtungen für Messungen in oder Probeentnahme aus einer Metallschmelze durch Einführen des als Wärmeisolierung wirksamen Schutzmantels (3; 3'; 3") zusammen mit der im Schutzmantel angebrachten Meß— oder Probeentnahmevorrichtung (2; 11) in die Metallschmelze (1), wobei der Schutzmantel bei Berührung mit der Metallschmelze eine kontrollierte und vorbestimmte turbulente Strömung der Metallschmelze um den Schutzmantel (3; 3'; 3") hervorruft, dadurch gekennzeichnet, daß der Schutzmantel ein Rohr (3) aus synthetischen, wärmeisolierenden, amorphen Mineralfasern aufweist, welche mittels eines Binders eines Typs, welcher bei Berührung mit der Metallschmelze Gase freisetzt, welche in der Metallschmelze eine kontrollierte und vorbestimmte aufsteigende Bewegung mit den Eigenschaften einer turbulenten Strömung entlang dem Schutzmantel (3; 3'; 3") hervorrrufen, stoffschlüssig miteinander verbunden sind und daß der Binder wenigstens teilweise organischer Natur ist und/oder daß in das Fasermaterial Substanzen eingelagert sind, welche bei der Temperatur der Metallschmelze spontan und fortlaufend Gase freisetzen.

4. Schutzmantel nach Anspruch 3, dadurch gekennzeichnet, daß die synthetische amorphe Mineralfaser vom Diabas-Typ ist und einen Erweichungspunkt von weniger als etwa 1200°C hat, bestimmt und gemessen nach dem durch das Schwedische Institut für Materialprüfung festgesetzten Verfahren.

5. Schutzmantel nach Anspruch 3 oder 4, dadurch gekennzeichnet, daß die Mineralfasern Fasern sind, welche eine ursprüngliche Masse pro Volumeneinheit von 20—70 kg/m$^3$ aufweisen, auf eine Masse pro Volumeneinheit von 200—800 kg/m$^3$, vorzugsweise 500—700 kg/m$^3$ komprimiert und zu einem Rohr geformt sind.

6. Schutzmantel nach Anspruch 3,. 4 oder 5, dadurch gekennzeichnet, daß die Binderkomponente von organischer Art ist und ein warmverfestigendes Harz aufweist, beispielsweise Phenolharz, Carbamidharz oder Melaminharz.

7. Schutzmantel nach Anspruch 5 oder 6, dadurch gekennzeichnet, daß der Binder in einer Menge von 2—8 Prozent der Masse, berechnet nach der Gesamtmasse der Fasern zugesetzt ist.

8. Schutzmantel nach einem der Ansprüche 3—7, dadurch gekennzeichnet, daß die turbulente Strömung der Metallschmelze durch den Zusatz von verschiedenen Arten des Binders und/oder unterschiedlichen Mengen des Binders gesteuert wird.

9. Schutzmantel nach einem der Ansprüche 3—7, dadurch gekennzeichnet, daß die turbulente Strömung der Metallschmelze dadurch gesteuert wird, daß man den Mineralfasermantel (3) mit unterschiedlicher Masse pro Volumeneinheit ausbildet.

10. Schutzmantel nach einem der Ansprüche 3—9, dadurch gekennzeichnet, daß die Wandstärke und die Härte des Mineralfaserrohrs (3) so berechnet sind, daß das Mineralfaserrohr (3), während es in der Metallschmelze fortschreitend konsumiert wird, eine vorbestimmte Stabilität für die notwendige Dauer der Probeentnahme oder Messung behält.

11. Schutzmantel nach einem der Ansprüche 3—10, dadurch gekennzeichnet, daß das wärmeisolierende Mineralfaserrohr (14) an seiner Innenseite ein dünnes Rohr (15) aus Pappe trägt.

**Revendications**

1. Procédé de fabrication de manchons de protection pour l'essai ou le prélèvement d'échantillons d'essai dans un métal liquide par introduction dans le métal liquide (1) du manchon de protection (3; 3'; 3") et de moyens d'essai ou d'échantillonnage (2; 11) montés dans ce manchon, caractérisé par les étapes qui consistent:

à lier entre elles des fibres minérales thermoisolantes par une quantité prédéterminée d'un liant pour former un tube, lequel tube agit en tant que manchon de protection, puis

à imprégner lesdites fibres minérales d'une solution qui, après l'évaporation du solvant, laisse des substances qui émettent spontanément et successivement des gaz au contact avec le métal liquide, provoquant un écoulement turbulent maîtrisé et prédéterminé de métal liquide autour du manchon de protection.

2. Procédé selon la revendication 1, caractérisé par l'agencement de la partie intérieure du tube minéral (14) afin qu'il porte une couche (15) constituée d'une matière présentant des propriétés d'émission de gaz sensiblement supérieures à celles desdites substances d'émission de gaz.

3. Manchon de protection fabriqué conformément au procédé de la revendication 1 ou 2, à utiliser dans la protection d'un équipement d'échantillonnage ou d'essai d'un métal liquide, par introduction, dans le métal liquide (1), du manchon de protection (3; 3'; 3") en tant qu'isolation thermique, en même temps que les moyens d'échantillonnage et d'essai (2; 11) montés dans le manchon de protection, et dans lequel le manchon de protection, au contact avec le métal liquide, provoque un écoulement turbulent maîtrisé et prédéterminé du métal liquide coulant autour du manchon de protection (3; 3'; 3''), caractérisé en ce que le manchon de protection comprend un tube (3) en fibres minérales amorphes thermoisolantes synthétiques qui sont liées les unes aux autres par un liant d'un type qui, au contact avec le métal liquide, émet des gaz qui confèrent au métal liquide un mouvement montant maîtrisé et prédéterminé, ayant le caractère d'un écoulement turbulent le long du manchon de protection (3; 3'; 3''), et en ce que le liant, au moins en partie, est d'une nature organique et/ou des substances ont été incorporées dans la matière fibreuse, lesquelles substances émettent spontanément et successivement des gaz à la température du métal liquide.

4. Manchon de protection selon la revendication 3, caractérisé en ce que la fibre minérale amorphe synthétique est du type diabase ayant un point de flexion de moins d'environ 1200°C, tel que défini et mesuré conformément à la méthode stipulée par l'Institut Suédois d'Essai des Matériaux.

5. Manchon de protection selon la revendication 3 ou 4, caractérisé en ce que les fibres minérales sont des fibres ayant une masse initiale par unité de volume de 20—70 kg/m$^3$, qui ont été comprimées à une masse par unité de volume de 200—800 kg/m$^3$ ou avantageusement de 500—700 kg/m$^3$ et qui ont été façonnées en forme de tube.

6. Manchon de protection selon la revendication 3, 4 ou 5, caractérisé en ce que le constituant liant est de type organique et comprend une résine thermodurcissable, par exemple, une résine phénolique, une résine carbamide ou une résine mélamine.

7. Manchon de protection selon les revendications 5 ou 6, caractérisé en ce que le liant est ajouté en quantité de 2—8% en masse, telle que calculée sur la masse totale des fibres minérales.

8. Manchon de protection selon l'une quelconque des revendications 3—7, caractérisé en ce que l'écoulement turbulent du métal liquide est maîtrisé par l'addition de différents types de liant et/ou de différentes quantités de liant.

9. Manchon de protection selon l'une quelconque des revendications 3—7, caractérisé en ce que l'écoulement turbulent du métal liquide est maîtrisé par le fait que le manchon (3) de fibres minérales est conçu pour présenter différentes masses par unité de volume.

10. Manchon de protection selon l'une quelconque des revendications 3—9, caractérisé en ce que l'épaisseur de la paroi et la dureté du tube (3) de fibres minérales sont calculées de manière que le tube (3) de fibres minérales, tout en étant consommé progressivement dans le métal liquide, conserve une stabilité prédéterminée durant la période nécessaire à l'échantillonnage ou à l'essai.

11. Manchon de protection selon l'une quelconque des revendications 3—10, caractérisé en ce que le tube (14) de fibres minérales thermoisolantes porte, à l'intérieur, un mince tube (15) de carton.

0 073 746

FIG. 1

FIG. 2

FIG. 3